# EUROPEAN PATENT APPLICATION

(11) **EP 4 703 162 A1**
(43) Date of publication of application: **04.03.2026**
(21) Application number: 23934325.4
(22) Date of filing: 02.06.2023
(51) Int. Cl.: B60H 1/00, G08B 21/14, B60H 1/24, B60H 1/26, G08B 25/10, G08B 25/08

(54) **DETECTION SYSTEM FOR REMEDYING HIGH CONCENTRATIONS OF CARBON DIOXIDE INSIDE THE PASSENGER COMPARTMENT OF MOTOR VEHICLES**

(30) Priority: 26.04.2023 BR 102023007998
(71) Applicant: Nabhan, José Marcos, 87201-134 Cianorte (BR)
(72) Inventor: Nabhan, José Marcos, 87201-134 Cianorte (BR)
(74) Representative: Cosmovici, Paul
(86) International application number: PCT/BR2023/050180
(87) International publication number: WO 2024/221067

(57) **Abstract**

DETECTION SYSTEM FOR LOWERING HIGH CONCENTRATIONS OF CARBON DIOXIDE INSIDE THE PASSENGER COMPARTMENT OF MOTOR VEHICLES in which breathing naturally, which produces CO₂, means the presence of people or animals inside the passenger compartment (30) of a vehicle (10) can be detected. In the presence of at least one occupant, in just a few minutes the concentration of carbon dioxide can become dangerous. To remediate high concentrations of carbon dioxide within the passenger compartment (30), a warning is provided that instructs any occupant to start the vehicle (10). Should the vehicle (10) not be started within a predetermined period of time after the warning, certain automatic remediation actions are taken, provided that the battery (12) of the vehicle (10) retains enough power to start the engine. If the automatic remediation actions fail to lower the levels of carbon dioxide, all available power is utilised for this purpose.

## Description

### Field of the invention

This invention relates to carbon dioxide detection systems for use in vehicles in which responses given by the system to an algorithm trigger an alarm and automatically take remedial actions to prevent an occurrence of carbon dioxide poisoning.

### Background of the invention

Carbon dioxide (CO₂) is present in the atmosphere and is required for plants to perform photosynthesis. However, high concentrations of carbon dioxide can be harmful to human health.

In the process of breathing, the body takes in oxygen and releases CO₂. In closed environments, such as the passenger compartment of motor vehicles, there is a risk of repeatedly inhaling the same air. This may lead to increased levels of CO₂ in the blood and cause symptoms such as headaches, drowsiness, eye irritation, mood swings and breathing difficulties. Closed environments in which people are forced to rebreathe the air usually occur in vehicles, particularly if the vehicle has its windows closed or the air conditioning system is set to internal circulation only.

U.S. Patent Application Publication no. 1999/027788 consists of a sensor for detecting gases, comprising a housing and an active element inside the housing. The active element is surrounded by a porous insulating material with a bulk density not exceeding 0.15 g/cm³. Another gas sensor comprises an active element surrounded by a porous material with a surface area of not more than approximately 200 m²/cm³. Another gas sensor comprises a copper compound positioned so that the gas comes into contact with the copper compound before coming into contact with the active element. Another gas sensor comprises an active element surrounded by a porous material with average pore size.

Document DK2005000381 shows sensor IV, specifically a CO₂ sensor with a filter arrangement behind which is a detector and an assessment device which is connected to the detector arrangement. The filter arrangement has a first filter and a second filter, wherein the first filter passes a predetermined IV band and the second filter does not. The detector arrangement has two detectors, each of which is combined with a filter. This is intended to simplify the application of the IV sensor. For this purpose, it is envisaged that the passband of one filter is arranged within the passband of the other filter and the assessment device takes the difference between the signals of both detectors and adapts it to the signal of one detector.

Document BRPI0601721-5 A2 demonstrates a process for calculating ozone in the atmosphere, through spectrophotometric and spectrofluorometric measurements, using filters impregnated with indigo blue to collect the gas. Spectrophotometric analyses performed at 600 nm, the process most commonly described in the literature, were shown to be significantly sensitive to the action of interferents, compared to measurements made at 250 nm. The data shows that more reliable ozone calculations are obtained in the ultraviolet region. Using a spectrofluorometric process, the measurements were quite sensitive, since it is possible to distinguish between close concentrations, which are often not differentiated by the spectrophotometric process. In addition, the selectivity was also superior to the spectrophotometric technique, since there was no interference from any other gaseous species, even when present in a concentration much higher than that of ozone.

Document DE2008000422 shows a generic method for detecting and identifying gases in the interior of an aircraft. The device is small and manageable and has a simple design that can immediately and simultaneously detect and identify the gases to be examined. This is achieved by the fact that the air supply from the interior of the aircraft is directed to a measuring device and the results from the measuring device are analysed by mathematical methods. These methods and devices associated with detecting and identifying gases in the interior of aircraft are used to detect and verify the presence of gases, particularly odours and explosive gases and/or gases harmful to human health.

Document IB2010051043 shows a sensor chip for gas, equipped with cells to emit and receive ultrasound. It is set to a sufficiently large frequency range to measure the concentration of at least one of the gas components based on at least two responses within the range. The frequency range can be achieved by varying the size of the cell membranes, varying the bias voltages, and/or by varying the air pressure. The sensor chip can be applied, for example, in capnography. A measurement air chamber is fitted into the airway and it and/or the airway can be designed to reduce turbulence in exhaled breath subject to ultrasound interrogation. The chip can be fitted as independent in monitoring parameters, avoiding the need for off-chip sensors.

Document EP2011068984 shows an air treatment device comprising an air purification unit, configured to purify the air. An air sensor is configured to measure a first amount of air and provide a measurement output, wherein the first amount of air comprises air purified by the air purification unit. A processor is configured to generate a first value based on the measurement output of the air sensor so as to calibrate the air sensor. Another version of the invention also provides a method for calibrating an air sensor of an air treatment device. This method comprises the steps for purifying the air using the air treatment device and measuring a first amount of air using the air sensor to obtain a first value so as to calibrate the air sensor.

Document IB2012053501 deals with the method to selectively detect the concentration of a target gas in polluted ambient air. A target gas sensor is exposed to a first gas flow for a first time interval and obtains a first output signal from the sensor. The target gas sensor is exposed to a second gas flow for a second time interval not overlapping the first time interval and obtaining a second output signal. The system calculates the difference between the first and second output signals and calculates the target gas concentration from the calculated signal difference.

U.S. Patent Application Publication No. 2016/0103111 demonstrates a vehicle occupant safety system that includes a carbon dioxide sensor and a controller. The CO₂ sensor is configured to determine the concentration of CO₂ in the passenger cabin while the vehicle is not in operation. The controller is configured to determine which passenger cabin is occupied by an occupant based on the concentration of CO₂ in the passenger cabin while the vehicle is not in operation. If CO₂ concentration is a concern while the vehicle is not in operation, the system can respond by activating a means of notification, such as a horn or vehicle alarm, or by ventilating the passenger cabin, using the vehicle's HVAC system. However, such remediation efforts consume power from the battery of the vehicle and cannot be sustained reliably beyond ten minutes. These remediation efforts are meaningless if the occupants of the vehicle remain in the vehicle long after the vehicle battery runs out of power. This prior art system can also open windows. However, if pets have been left in the vehicle, opening the windows (18) can enable the pets to escape. It can also leave the occupants of the vehicle vulnerable to hypothermia if the temperature outside the vehicle is cold.

Given the state of the art documents, there is a clear need for a carbon dioxide monitoring system that can be used in a vehicle, where high concentrations of CO₂ can be mitigated in a way that conserves power in order to produce a long-term mitigation solution. This need is met by the present invention as described and claimed below.

### Summary of the patent

Breathing naturally produces CO₂, which means that the presence of people or animals inside the passenger compartment of a vehicle can be detected. In the presence of at least one occupant, in as little as five minutes, the concentration of carbon dioxide can exceed 1000 ppm, which is the tolerance limit recommended by the World Health Organization.

To remediate high concentrations of carbon dioxide within the passenger compartment of a vehicle, a warning is provided within said passenger compartment that instructs any occupant of said vehicle to start the vehicle. Should the vehicle not be started within a predetermined period of time after the warning then certain automatic remediation actions are taken, provided that the battery of the vehicle retains enough power to start the engine.

If the automatic remediation actions fail to lower the levels of carbon dioxide, then the conservation of enough battery power to start the vehicle is abandoned. All available power is utilised to reduce the levels of carbon dioxide and to bring assistance to the occupants of the vehicle.

### Brief description of the drawings

Examples of forms of the present invention are now described with reference to the drawings, where:
Figure 1 is a plan of an example vehicle containing the present invention of a carbon dioxide detection system; and
Figure 2 is a block flow diagram showing the operations of the example system, using a CO₂ sensor (32) for detecting carbon dioxide shown in Fig. 1.

### Description of the invention

The following description refers in detail to the preferred form of the present invention, as illustrated in the drawings, with numerical references indicating the elements and components illustrated throughout the proposed views. The illustrated form, however, is merely an example and should not be regarded as a limitation when interpreting the scope of the appended claims.

It should be understood that the technology shown herein is not limited in its application to the construction details and arrangement of components set forth in this description or illustrated in the drawings, insofar as it can be realised in other forms and in various ways.

It should be understood that the forms disclosed herein include hardware and electronic components or modules which, for the purposes of discussion, may be illustrated and described as if most components were implemented in hardware only.

In this regard, a technician in the field would recognise, based on reading this detailed description, that in at least one form, the electronic aspects of the technology disclosed herein can be implemented in software. As such, it should be noted that a variety of hardware and software-based devices, as well as a variety of different structural components, may be used to implement the technology as disclosed herein.

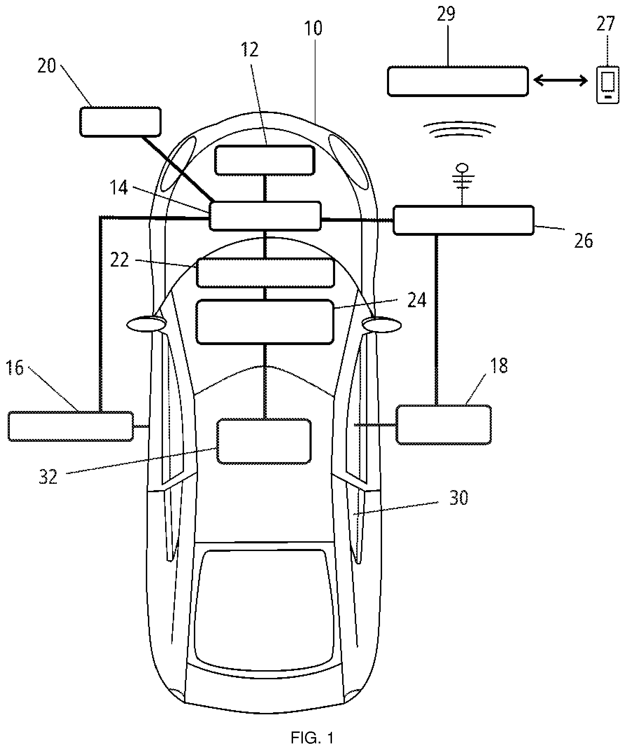

Fig. 1 shows a vehicle (10) fitted with the present CO₂ detection system. Although the vehicle (10) illustrated is a passenger car, it should be understood that the vehicle (10) could be an aeroplane, truck cabin, boat, motorhome or the like. The vehicle (10) illustrated is intended to be an example of any vehicle that has an enclosed passenger compartment.

The vehicle (10) has a battery (12) that is normally charged by the vehicle's engine (10). If the vehicle (10) is an electric vehicle, then the battery (12) is charged when the vehicle (10) is connected to a charging station. The vehicle (10) has various components and systems that are electrically operated. Accordingly, when the vehicle (10) is not running, these components and systems draw power directly from the battery (12). The various components and systems include at least one computer (14), electric door locks (16), electric window motors (18), lights (20), an audiovisual display (22) and a ventilation fan (24). The computer (14) contains circuitry and/or programming that monitors the power level of the battery (12). The vehicle (10) may also have a transceiver (26) that enables the vehicle (10) to communicate with a data network (29), such as a cellular network. The same data network (29) can also be accessed by a computer or smart device (27) that runs the appropriate software application 28.

The vehicle (10) has a passenger compartment (30). People and/or pets may be waiting in the passenger compartment (30). People may be smoking, thereby increasing the rate that CO₂ is released into the passenger compartment (30). The purpose of this invention is to monitor CO₂ levels within the passenger compartment (30) of the vehicle (10) and take active measures to guarantee that CO₂ levels do not reach dangerous concentrations. For this purpose, a CO₂ (32) sensor is provided within the passenger compartment (30) of the vehicle (10). The levels of CO₂ that collect in the passenger compartment (30) rarely become dangerous while the vehicle (10) is in motion. This is because most modern vehicles automatically ventilate the passenger compartment (30) as they run. Furthermore, fresh air is brought in using electric motors to open the windows (18) and/or the heating, ventilation fan (24) and/or air conditioning systems. Danger typically arises when a vehicle (10) is switched off and one or more people and/or pets are waiting in the passenger compartment (30). In such a scenario, the CO₂ within the vehicle (10) can quickly rise to dangerous levels.

When a vehicle (10) with an engine is switched off, the battery (12) is designed to hold enough power to restart the vehicle (10). Often, the electrical systems of the vehicle (10) can be operated for short periods of time. However, prolonged use of electrical systems after shutdown can quickly drain the battery (12). For example, when the headlights are left on, intentionally or otherwise, in a matter of minutes there will not be enough charge in the battery (12) to restart the vehicle (10).

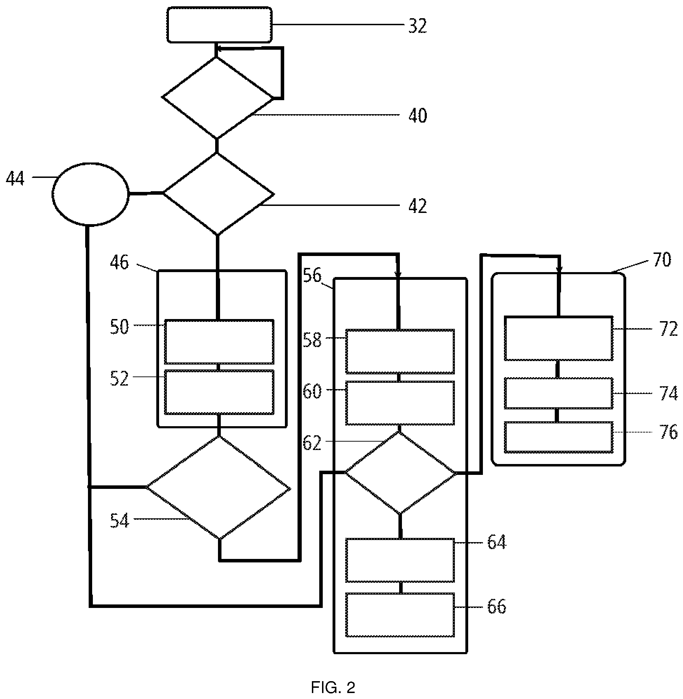

Fig. 2 shows the logical steps and operational methodology of this system. The operational method contains power management protocols to ensure that when people and/or pets are waiting in a vehicle (10) and the CO₂ levels begin to rise, the battery power (12) that is available is sufficient to save those people from potential harm over a prolonged period of time.

In steps 40 and 42, in which it is indicated when the CO₂ threshold is exceeded and if the battery (12) has sufficient charge, the CO₂ (32) sensor detects the CO₂ levels inside the passenger compartment (30). A danger threshold is set. For example, the danger threshold can be set at 700 ppm of CO₂ or 1000 ppm of CO₂. If the CO₂ level detected by the CO₂ (32) sensor exceeds the threshold, the amperage charge of the battery (12) is accessed.

In step 44, if the power available in the battery (12) is near or below the power needed to start the vehicle (10), then an alarm signal is immediately sent while some power is still available in the battery (12). The alarm signal is sent through the transceiver (26) and the data network (29) to the computer and/or smart device (27) that is running the appropriate software application (28). The alarm signal is most likely to be sent to the owner of the vehicle (10). The owner of the vehicle is most likely to know the identity of any other person who is sitting in the vehicle (10). The alarm signal can indicate the potentially harmful situation and can suggest that the vehicle (10) be started, the electric motors be activated to open the windows (18), and/or another remediation tried.

The windows (18) are only partially opened to prevent any pet, such as a dog or cat, in the vehicle (10) from escaping. An alarm indicator is also sent to the computer or smart device (27) running the software application (28).

Step 46 involves voluntary remediation, which means if the battery (12) is fully charged or is sufficiently charged to start the vehicle (10), the first voluntary remediation period is triggered. Using the audiovisual display (22) within the vehicle (10), the occupants are informed of the potentially dangerous levels of CO₂.

Step 50 shows the provision of a warning to the occupants.

Step 52 refers to sending instructions to occupants. Starting the vehicle (10) is the best long-term solution for providing the power needed for remediation. Furthermore, many vehicles have automatic ventilation systems that are activated when the vehicle (10) is started. If the vehicle (10) is started, then there is a renewable supply of electrical power on which to draw.

The occupants of the vehicle (10) can be instructed to activate the ventilation fan (24) and/or activate the electric motors to open the windows (18), as per Step 52 which refers to sending instructions to the occupants. These actions will quickly lower the concentration of CO₂ in the passenger compartment (30). Once the CO₂ levels return to normal, the system can inform the occupants of the vehicle (10) to turn the vehicle off, close the windows by means of the electric motors (18) and/or stop the ventilation fan (24).

The initial period of voluntary remediation can be between five minutes and ten minutes. If the instructions provided to the occupants of the vehicle (10) are not heeded, the vehicle (10) will not be started. If the permitted period of time elapses and the CO₂ levels being detected are still above the threshold, then a subsequent period of automatic remediation is started, as per steps 54 and 56, which indicate that the occupants followed the instructions and the automatic remediation began.

In step 58, indicating that the windows (18) have been partially opened during the automatic remediation period, the electric motors are automatically activated to partially open the windows (18) of the vehicle (10).

In step 60, if the battery power (12) is sufficient, the ventilation fan (24) is activated automatically.

As shown in step 62, indicating the CO₂ threshold, in step 64, showing the windows closing (18), and in step 66, showing that the ventilation fan has stopped (24), the partial opening of the windows (18) and/or the operation of the ventilation fan (24) will reduce the dangerous levels of CO₂. The period of automatic remediation should last between five minutes and ten minutes. If the air quality improves during this period, then the windows (18) are again closed and the ventilation fan (24) stopped. In this way, pets or children waiting in the vehicle (10) during a very cold day will not freeze.

In step 70, if the concentration of CO₂ does not diminish during the period of automatic remediation, then a period of emergency action is taken. If the emergency action period is initiated, charging the battery (12) is abandoned. If an emergency is detected, all available power is directed towards actions to help save the occupants of the vehicle (10).

As shown in step 44, with the remaining power, an emergency alarm signal is sent to the smart device (27) running the software application (28). The same alarm is sent to the passenger compartment (30) and the electric door locks (16) are automatically unlocked to enable people outside the vehicle (10) to access the passenger compartment (30), as indicated in step 72, showing the internal alarm, and in step 74, showing the unlocking of the electric locks (16) on the doors. The windows (18) would already be partially open. If enough power remains in the battery (12), then the ventilation fan (24) will be activated.

In step 76, provided there is enough power available to run the ventilation fan (24) for at least five minutes, external alarms can also be activated. The external alarms include the flashing of the lights (20) on the vehicle (10) and the sounding of the horn (21). The external alarms are periodically activated and deactivated to prolong the overall length of active time.

Although the invention has been described with reference to several specific details, a person skilled in the art will recognise that the invention can be embodied in other specific forms without departing from the spirit of the invention. Figures 1 and 2 illustrate the processes in conceptual terms. Furthermore, the process can be implemented using several sub-processes or as part of a larger macro process. Thus, a person skilled in the art would understand that the invention should not be limited by the foregoing illustrative details, but should be defined by the appended claims.

## Claims

1. A method for lowering high concentrations of carbon dioxide inside the passenger compartment (30) of a vehicle (10), **which** comprises the:
monitoring of carbon dioxide levels inside said passenger compartment (30) using a CO₂ sensor (32);
provision of a warning inside said passenger compartment (30) instructing any occupant of said vehicle to start said vehicle (10) if carbon dioxide levels exceed a predetermined threshold;
automatic opening of at least one window (18) of said vehicle (10), if the vehicle (10) is not started within a predetermined period of time after said warning.

2. The method according to claim 1, **involves** transmitting an alarm message to a smart device (27) informing of carbon dioxide levels exceeding said predetermined limit.

3. The method according to claim 1, where said vehicle (10) has a battery (12), and the **energy available** in said battery is monitored (12).

4. The method according to claim 3, **involved** calculating whether said battery (12) has excess energy beyond that required to start said vehicle (10).

5. The method according to claim 4, **involves** automatic operation of a ventilation fan (24) if the ignition of said vehicle (10) is not switched on within said predetermined period of time after the said warning.

6. The method according to claim 5, wherein said vehicle has electric locks (16) on the doors leading to said passenger compartment (30), **involves performing the automatic** unlocking operation of the electric locks (16) when said ventilation fan (24) operates beyond a preselected run time and the carbon dioxide levels remain above said predetermined limit.

7. The method according to claim 5, **involves performing** the operation in which the lights (20) are activated and in which said lights (20) flash automatically when the ventilation fan (24) operates beyond said preselected running time and the carbon dioxide levels remain above said predetermined limit.

8. A method for remedying high concentrations of carbon dioxide inside the passenger compartment (30) of a vehicle (10) having a battery (12), **comprising** of:
monitoring the energy available from said battery (12);
monitoring of carbon dioxide levels inside said passenger compartment (30) using a CO₂ sensor (32);
providing of a warning inside said passenger compartment (30) instructing any occupant of said vehicle to start said vehicle (10) if carbon dioxide levels exceed a predetermined threshold;
automatic execution of corrective measures to reduce said carbon dioxide levels if the ignition of the vehicle (10) is not initiated within a predetermined period of time after said warning and if said battery (12) contains excess energy beyond that required for the ignition of said vehicle (10).

9. The method according to claim 8, **involves** selecting said corrective measures from a list consisting of: partially opening at least one window (18), activating at least one ventilation fan (24), and sending an alert to a smart device (27) located away from the vehicle (10).

10. The method according to claim 8, **includes performing at** least one emergency measure to reduce said carbon dioxide levels if ignition of said vehicle (10) is not initiated within said predetermined time period after said warning and said battery (12) does not contain excess energy beyond that required to start said vehicle (10).

11. The method according to claim 10, **includes selecting** at least one emergency measure from a group consisting of: partially opening at least one window (18), activating at least one ventilation fan (24), sending an alert to a smart device (27) located some distance from said vehicle, flashing lights (20) on said vehicle (10), sounding the horn (21) of said vehicle (10), and unlocking the electric locks (16) of the doors of said vehicle (10).

## Amended claims

### Amended claims under Art. 19.1 PCT

1. A method for lowering high concentrations of carbon dioxide inside the passenger compartment (30) of a vehicle (10), **which** comprises the:
monitoring of carbon dioxide levels inside said passenger compartment (30) using a CO₂ sensor(32);
provision of a warning inside said passenger compartment (30) instructing any occupant of said vehicle to start said vehicle (10) if carbon dioxide levels exceed a predetermined threshold;
automatic opening of at least one window (18) of said vehicle (10), if the vehicle (10) is not started within a predetermined period of time after said warning;
automatic operation of a ventilation fan (24) if the ignition of said vehicle (10) is not switched on within said predetermined period of time after the said warning;
automatic unlocking of the electric locks (16) when the said ventilation fan (24) operates beyond a preselected runtime and the carbon dioxide levels remain above the said predetermined limit;
operation in which the lights (20) are activated and in which said lights (20) flash automatically when the said ventilation fan (24) operates beyond a preselected runtime and the carbon dioxide levels remain above the predetermined limit;
selecting the said corrective measures from a group consisting of: partially opening at least one window (18), activating at least one ventilation fan (24), and sending an alert to a smart device (27) located some distance from said vehicle (10);
selecting at least one emergency measure from a group consisting of: partially opening at least one window (18), activating at least one ventilation fan (24), sending an alert to a smart device (27) located some distance from said vehicle, flashing lights (20) on said vehicle (10), sounding the horn (21) on said
vehicle (10), and unlocking the electric locks (16) of the doors of said vehicle (10);
where said vehicle (10) has a battery (12), **and the** energy available in said battery is monitored (12).

2. The method according to claim 1, **involved** calculating whether said battery (12) has excess energy beyond that required to start said vehicle (10).

3. One method for lowering high concentrations of carbon dioxide inside the passenger compartment (30) of a vehicle (10) with a battery (12) according to claim 1, **consisted of** abandoning the conservation of sufficient battery power (12) to start the vehicle (10) if the automatic remediation actions are insufficient, so that all available power is used to perform at least one emergency measure from a group consisting of: partially opening at least one window (18), activating at least one ventilation fan (24), sending an alert to a smart device (27), flashing lights (20) and sounding the horn (21) of said vehicle (10), and unlocking the electric locks (16) of the doors of said vehicle (10) to reduce the carbon dioxide levels.
